Europäisches Patentamt

European Patent Office

Office européen des brevets

(11) Veröffentlichungsnummer: **0 199 073**
**A1**

## (12) EUROPÄISCHE PATENTANMELDUNG

(21) Anmeldenummer: 86103543.4

(22) Anmeldetag: 17.03.86

(51) Int. Cl.⁴: **F01D 9/04** , F01D 5/30

(30) Priorität: 19.04.85 DE 3514122

(43) Veröffentlichungstag der Anmeldung:
29.10.86 Patentblatt 86/44

(84) Benannte Vertragsstaaten:
CH DE FR GB IT LI SE

(71) Anmelder: **MAN GUTEHOFFNUNGSHÜTTE GMBH**
**Bahnhofstrasse, 66**
**D-4200 Oberhausen 11(DE)**

(72) Erfinder: **Weissbacher, Georg, Dipl.-Ing.**
**Flughafenweg 1**
**D-4234 Alpen(DE)**

(54) **Verfahren zur Herstellung einer Leitschaufel für ein Turbinen- oder Verdichter-Leitrad und nach dem Verfahren hergestellte Leitschaufel.**

(57) Verfahren zur Herstellung einer Leitschaufel für ein Turbinen-oder Verdichter-Leitrad, unter Verwendung eines mit Übermaß abgelängten Profilstabes aus wärme-und korrosionsbeständigem Metall, insbesohdere zur Vorbereitung für das Einlöten in das Leitrad, wobei dem Stab an wenigstens einem Ende im kalten Zustand eine fußartige Verdickung angestaucht und in deren Bereich eine Lötfläche ausgebildet wird.

FIG. 1a    FIG. 1b    FIG. 1c

EP 0 199 073 A1

## Verfahren zur Herstellung einer Leitschaufel für ein Turbinen-oder Verdichter-Leitrad und nach dem Verfahren hergestellte Leitschaufel

Die Erfindung betrifft ein Verfahren zur Herstellung einer Leitschaufel für ein Turbinen-oder Verdichter-Leitrad, unter Verwendung eines mit Übermaß abgelängten Profilstabes aus wärme-und korrosionsbeständigem Metall, insbesondere zur Vorbereitung für das Einlöten in das Leitrad, sowie eine nach dem Verfahren hergestellte Leitschaufel.

Es ist bekannt, Leitschaufeln für ein Turbinenleitrat mit einem profilierten Fuß auszubilden und die Leitschaufel mit diesem in eine .kompatibel profilgeformte Nut in den Schaufelträger einzusetzen und den äußeren Ring, das sogenannte Deckbord, aufzunieten. Hierfür ist die Leitschaufel kopfseitig mit einem zum Vernieten vorgesehenen Stift ausgebildet.

Eine andere bekannte und beim derzeitigen Entwicklungsstand vielfach angewandte Fertigung eines Leitschaufelkranzes besteht darin, daß die Leitschaufeln fußseitig und kopfseitig mit dem inneren bzw. dem äußeren Leitschaufelring durch Stumpflötung verbunden werden. Durch Verwendung von beispielsweise Gold-Nickel-Lot 80 Au/20 Ni werden hochwertige und hochbeanspruchbare Lötverbin dungen unter Schutzgas oder im Vakuum gelötet, welche zur Belastung unter Dauerbetriebstemperaturen bis 400° erfolgreich geeignet sind. Im Falle höherer Betriebstemperaturen wird beispielsweise ein um etwa 300° C höher - schmelzendes Palladium-Nickel-Lot 60 Pd/40 Ni mit Vorteil verwendet. Die mechanischen Gütewerte der Lötverbindungen mit diesen Loten liegen etwa um 20 % unterhalb der Festigkeitswerte des Materials der verlöteten Teile.

Hinsichtlich der erforderlichen Festigkeit, insbesondere bei durch unterschiedliche Wärmedehnungen entstehenden Spannungen im Leitschaufelkranz bildet demnach die Lötstelle das schwächste Glied einer Kette von Festigkeitswerten. Zudem wird die Lötstelle bei Stumpflötung einer im wesentlichen senkrecht auf der Grundfläche stehenden Leitschaufel infolge Konzentration des Kraftlinienflußes im Randbereich der Schaufelkontur nach Art einer Kerbwirkung kritisch hoch beansprucht.

Der Erfindung liegt die Aufgabe zugrunde, ein Verfahren zur Herstellung einer Leitschaufel für ein Turbinenleitrad, insbesondere zum Einlöten in das Leitrad, anzugeben, welches der beim Stumpfschweißen bisher sich ergebenden Verringerung der Festigkeit der Lötverbindung gegenüber dem Grundmaterial von Leitschaufel und Ringen Abhilfe schafft, ohne die fertigungstechnischen Vorteile der Stumpflötung zu vermindern, das Materialgefüge der Leitschaufel zu beeinträchtigen, und insbesondere ohne den Fertigungsaufwand wesentlich zu erhöhen.

Weiter liegt der Erfindung die Aufgabe zugrunde, eine hierfür geeignete, insbesondere nach dem Verfahren hergestellte Turbinen-oder Verdichter-Leitschaufel zum Einlöten in einen Leitschaufelkranz anzugeben.

Die Lösung der gestellten Aufgabe gelingt bei einem Verfahren zur Herstellung einer Leitschaufel für ein Turbinen-oder Verdichter-Leitrad, unter Verwendung eines mit Übermaß abgelängten Profilstabes mit der Erfindung dadurch, daß dem Stab an wenigstens einem Ende im kalten Zustand eine fußartige Verdickung angestaucht und in deren Bereich eine Lötfläche ausgebildet wird.

Mit Vorteil wird durch das Verfahren in überraschend einfacher Weise im Bereich der fußartigen Verdickung eine wesentlich vergrößerte Lötfläche ausgebildet, wobei diese insbesondere unter Verbesserung des Verlaufes der Kraftlinien mit einem stetigen Übergang zur verbreiterten Lötfläche hin verläuft. Dadurch wird die Festigkeit der Lötverbindung infolge wesentlich vergrößerter Lötfläche- im Verhältnis zur Festigkeit der Leitschaufel im Bereich ihres ursprünglichen Profils signifikant erhöht. Im Verhältnis zu dem sich hieraus ergebenden Vorteil ist der Arbeitsaufwand durch Anstauchen relativ gering. Der Aufwand für das Lötverfahren an und für sich bleibt im wesentlichen unverändert.

Eine Ausgestaltung sieht vor, daß die Zone der durch Stauchung erzielten Kaltverformung eine im Verhältnis zur Breite der fußartigen Verdickung relativ geringe Tiefe in axialer Richtung aufweist.

Mit Vorteil wird hierdurch erreicht, daß insbesondere die fußseitige Randzone der Strömung des von der Leitschaufel erfaßten strömenden Mediums nicht beeinträchtigt wird. Darüber hinaus wird durch die geringe axiale Tiefe des Stauchungsbereiches erreicht, daß nur relativ wenig Material bei der Kaltverformung zum Fließen gebracht werden muß, wodurch sich die hierfür aufzuwendende Verformungsarbeit in relativ engen Grenzen hält.

Um hierbei mit Vorteil ein optimales Ergebnis der Verformung bei möglichst geringem Arbeitsaufwand zu erzielen, sieht eine Ausgestaltung weiter vor, daß das An stauchen des Stabendes mit einer schnellen Folge bleibender partieller Verformungsimpulse im kaltplastischen Zustand des Materials

mit Hilfe eines Nieverfahrens vorgenommen wird. Insbesondere ist hierbei mit Vorteil vorgesehen, daß das Anstauchen mit Hilfe eines Taumelnietverfahrens vorgenommen wird.

Ein wesentlicher Vorteil des Nietverfahrens und insbesondere des Taumelnietverfahrens besteht darin, daß die radiale Verformung die tangentiale Verformung der Werkstücke überwiegt und infolgedessen eine fußartige Verdickung mit gleichmäßigem Übergang und relativ geringer Tiefe in axialer Richtung bei geringstmöglichem Aufwand an Verformungsarbeit ermöglicht wird.

Mit Vorteil werden bei einem beidseitig eine Verdickung aufweisenden Leitschaufel-Formling die Stauchungen der beiden Stabenden gleichzeitig mit zwei entgegengerichteten Nieteinheiten im Tandemverfahren durchgeführt. Durch diese spezielle Art der Bearbeitung wird eine Reduzierung in Zeit und Aufwand der Verformungsarbeit erreicht, und die auf den Stab einwirkenden Kräfte werden mindestens zum Teil gegenseitig kompensiert, und dadurch die Spannvorrichtung entlastet.

Weiter sieht eine vorteilhafte Ausgestaltung des Verfahrens vor, daß aus einem doppeltlangen, Übermaß aufweisenden Vormaterial-Profilstab durch gleichzeitig-beidseitiges Austauschen von fußartigen Verbreiterungen der beiden Enden und anschließende mittige Trennteilung zwei zur Endbearbeitung vorgesehene Leitschaufel-Formlinge hergestellt werden. Hierdurch wird mit Vorteil die Ökonomie des Herstellungsverfahrens weiter verbessert.

Entsprechend der Lage einer Leitschaufel im Leitschaufelkranz sieht eine weitere Ausgestaltung des Verfahrens vor, daß die Ebene der Stauch-Bearbeitung und damit die Verformungs-Hauptrichtung zur Längsachse des Leitschaufel-Formlings einen stumpfen Winkel aufweist. Und schließlich sieht das Herstellungsverfahren in der Endphase vor, daß der Leitschaufel-Formling nach Beendigung des Anstauch-Vorganges beidseitig abgelängt und das angestauchte Ende abgegratet, durch spanabhebende Bearbeitung die endseitigen Lötflächen maßhaltig hergestellt und feingeschlichtet und zuletzt ringsum entgratet werden.

Ein nach dem Verfahren der Erfindung, insbesondere nach den Ansprüchen 1 bis 8 hergestellter Turbinen-Leitschaufel-Formling, insbesondere zum Einlöten in einen Leitschaufelkranz, weist zumindest am äußeren Ende eine kaltangestauchte fußartige Verdickung auf, die mit einer endständigen Lötfläche 12 ausgebildet ist.

Darüber hinaus ist die nach der Erfindung hergestellte Leitschaufel dadurch gekennzeichnet, daß das Material des Formlings im Bereich der fußartigen Verdickung eine durch Kaltverdichtung im plastischen Zustand gegenüber dem Grundmaterial verändertes, insbesondere feinkörniges Gefüge aufweist.

Mit Vorteil ergibt sich eine Besonderheit des Taumelnietverfahrens dadurch, daß das Gefüge der Leitschaufel im Bereich der Verdickung im wesentlichen keine oder nur eine sehr geringe Kern-oder Randzonenverhärtung aufweist, und somit insbesondere die für eine Leitschaufel erforderliche Gefügezähigkeit im wesentlichen unverändert ist.

Und schließlich weist der Leitschaufel-Formling nach der Erfindung eine angestauchte Lötfläche auf, die gegenüber der Querschnittsfläche des Stabes wesentlich vergrößert und insbesondere gegenüber dem Schaufelprofil wesentlich verbreitert ist.

Die Erfindung wird in Zeichnungen in einer bevorzugten Ausführungsform gezeigt, wobei aus den Zeichnungen weitere vorteilhafte Einzelheiten der Erfindung entnehmbar sind. Es zeigen:

Figur 1 a bis 1 c eine Leitschaufel für ein Turbinenleitrad, in perspektivischer Ansicht, in Seitenansicht und in Frontansicht,

Figur 2 eine Leitschaufel in einer Spanneinrichtung, während der Bearbeitung durch zwei im Tandemverfahren arbeitende Taumelnieteinheiten einer Anstauchvorrichtung, in Draufsicht,

Figur 3 die Spannvorrichtung der Anstauchvorrichtung gemäß Figur 2, in Seitenansicht, mit zur Kaltverformung durch ein Taumelnietverfahren eingespannter Leitschaufel.

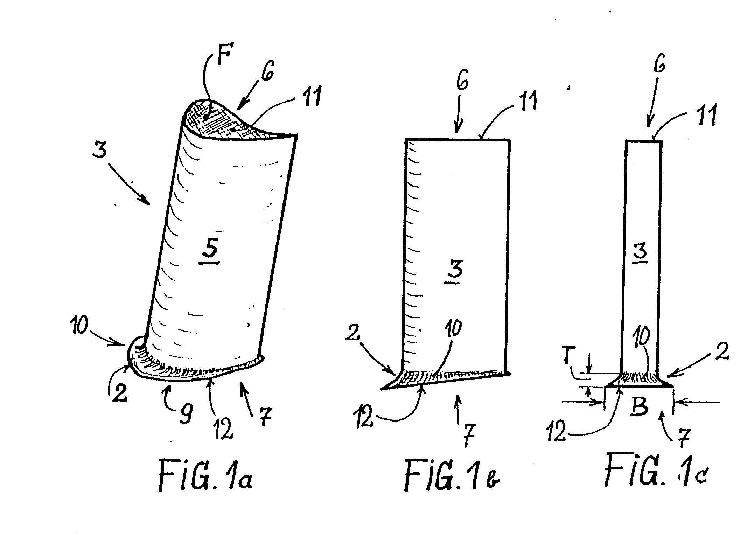

Die Leitschaufel 3 in Figur 1 a ist aus einem mit Übermaß von einem profilgezogenen Vormaterial abgelängten Profilstab 5 gefertigt. Sie weist ein Kopfteil 6 und ein Fußteil 7 auf. Zur Herstellung einer einbaufertigen Leitschaufel 3, insbesondere zur Vorbereitung für das Einlöten in ein Leitrad wurde dem Stab 5 gemäß Erfindung am Fußteil 7 im kalten Zustand eine fußartige Verdickung 2 angestaucht und in deren Bereich, an der Unterseite 9, eine Lötfläche 12 ausgebildet.

Aus der Zusammenschau der Figuren 1 a, 1 b und 1 c ist ersichtlich, daß die Zone 10 der durch Stauchung erzielten Kaltverformung eine im Verhältnis zur Breite B der fußartigen Verdickung 2 relativ geringe Tiefe T in axialer Richtung aufweist. Die zum Lötvorgang fertig bearbeitete Leitschaufel 3 ist nach dem Anstauchen der fußartigen Verdickung 2 durch maßhaltiges Ablängen am Kopfteil 6 und am Fußteil 7 jeweils mit einer kopfseitigen Lötfläche 11 sowie mit einer fußseitigen Lötfläche 12 ausgebildet. Beide Lötflächen sind durch maschinelle Bearbeitung wie Schleifen oder feinschichtendes Fräsen maßhaltig und ebenflächig aus dem zunächst mit Übermaß vorgegebenen Material von Kopfteil 6 und Fußteil 7 herausgearbeitet.

Die gezeigte lötfertige Leitschaufel gemäß Figur 1 a, 1 b und 1 c ist nur an einem, dem fußseitigen Ende 7 mit einer kalt angestauchten Verdickung ausgebildet. Es liegt jedoch im Ermessen des Fachmannes, fallweise auch die kopfseitige Lötfläche 11 mit einer beim Ausführungsbeispiel nicht gezeigten Verdickung auszubilden, falls dies aus Festigkeitsgründen erforderlich sein sollte. Die aus den Figuren 1 a bis 1 c erkennbare Zone 10 der angestauchten Verdickung 2 ist durch ein an sich bekanntes Taumelnietverfahren hergestellt. Diese Herstellungsart ist deshalb von großem Vorteil, weil dabei die radiale Verformung die tangentiale Verformung überwiegt. Auf diese Weise ergibt sich, wie insbesondere aus Figur 1 c erkennbar, die an sich geringe axiale Tiefe T der Anstauchung mit beiderseits flachschrägem Verlauf zur Lötfläche 12. Hierdurch wird mit großem Vorteil für das Strömungsleitvermögen der Leitschaufel eine Störung oder gar ein Abriß der Strömung im Bereich der fußartigen Verdickung 2 vermieden.

Weiterhin ergibt sich durch das Taumelnietverfahren eine sehr schonende Materialverformung gegenüber anderen Verfahren, wobei der Nietstempel mit höchstmöglicher Geschwindigkeit auf das Werkstück aufsetzt und das Material an der Einwirkungsstelle sofort kalt zum Fließen bringt, ohne daß hierdurch eine wesentliche Kern-oder Randzonenverhärtung eintritt. Die Taumelbewegung und der direktwirkende, kraftschlüssige Antrieb einer entsprechenden Nieteinheit sorgen dafür, daß das Material während der jeweils kurzen Zeit des plastischen Zustandes ohne Bruch der Materialfaser bleibend verformt wird. Dabei ergeben sich beispielsweise Nietzeiten in der Größenordnung von einer bis zu einigen Sekunden.

Wie aus der Darstellung der Leitschaufelausbildung im Fußteil 7 erkennbar, ergibt die durch Anstauchung erreichte Verdickung 2 der Zone 10 eine Vergrößerung der Lötfläche 12 gegenüber der beispielsweise am Kopfteil 6 der Figur 1 a erkennbaren Querschnittsfläche F des Stabes 5 um einen Faktor von schätzungsweise zwischen 1,5 und 2. Damit wird die Festigkeit der Lötfläche um diesen Faktor gegenüber einer reinen Stumpflötung ohne Querschnittsverbreiterung erhöht. Eine weitere Erhöhung ergibt sich dadurch, daß durch den stetigen Übergang des Profilmaterials in die angestauchte Verdickung 2 ein wesentlich verbesserter Kraftlinienfluß von inneren Ring des Leitschaufelkranzes in die Leitschaufel erfolgt, und dadurch die bei einer unverdickten Stumpflötung vorhandene Kerbbeanspruchung vermieden wird.

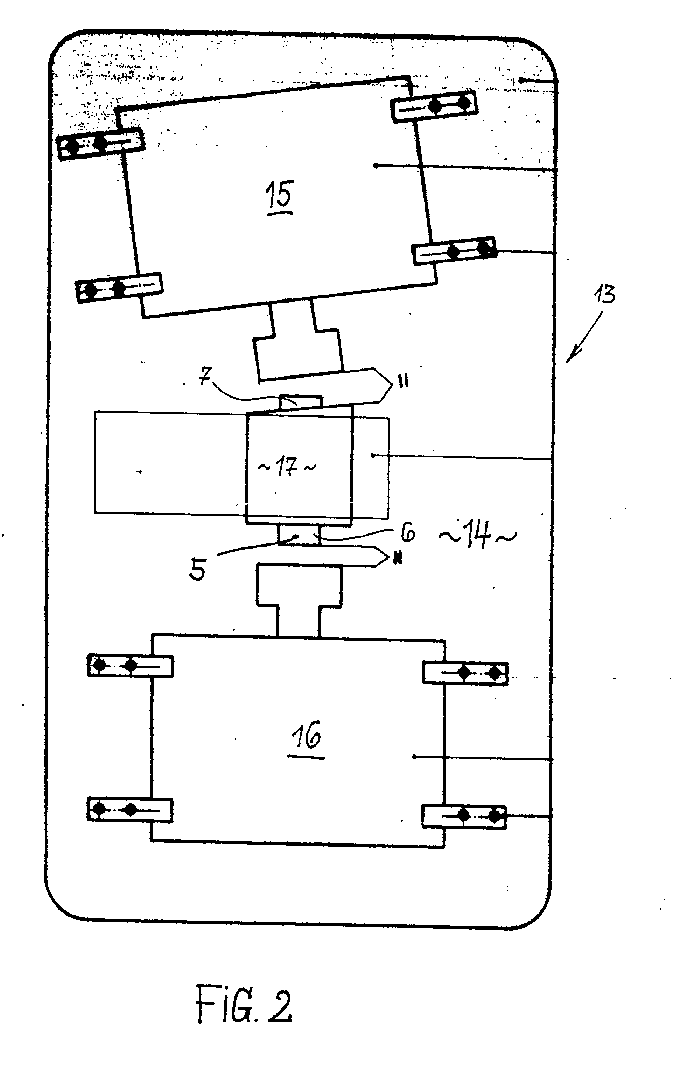

Figur 2 zeigt ein Konzept einer Anstauchvorrichtung 13. Auf einer Grundplatte 14 sind zwei Taumelnieteinheiten 15, 16 aufgespannt. Der zu bearbeitende Profilstab 5 ist in einer Spanneinheit 17 fest und derart eingespannt, daß er mit dem Kopfteil 6 und dem Fußteil 7 zu beiden Seiten aus der Spanneinheit 17 vorsteht.

Das Taumelnietverfahren als dem Fachmann bekannt vorausgesetzt, bedarf die Funktion der Anstauchvorrichtung keiner weiteren Erläuterung. Die Schrägstellung der Nieteinheit 15 im stumpfen Winkel zur Längsachse des zu bearbeitenden Formlings 5 bewirkt die insbesondere aus Figur 1 b deutlich erkennbare schräg-einseitige Anstauchung in der vorgesehenen Weise. Bei der in Figur 2 gezeigten doppelseitigen Bearbeitung kann es sich um eine Leitschaufelausbildung handeln, bei welcher je am Kopfteil 6 und am Fußteil 7 eine Verdickung 2 ange staucht werden soll. Andererseits kann die Anordnung auch deshalb so getroffen sein, um bei entgegengerichteter Nieteinwirkung eine Kompensation der in axialer Richtung auf den Formling 5 einwirkenden Kräfte der Verdichtungsschläge zu erzielen.

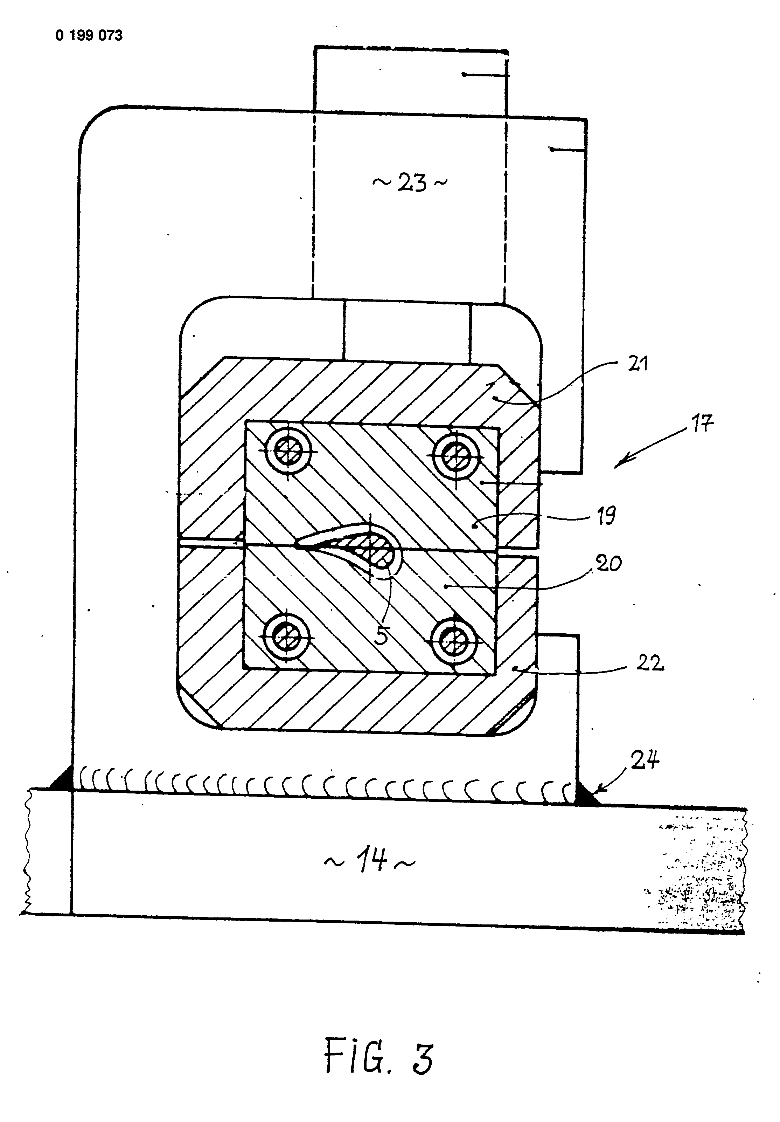

Figur 3 zeigt eine Spanneinheit 17 im Schnitt. Der Profilstab 5 ist hierbei zwischen die beispielsweise aus Kupfer hergestellten Spannbecken 19 und 20 eines oberen Spannwerkzeuges 21 und eines unteren Spannwerkzeuges 22 mit Hilfe der Krafteinwirkung eines Hydraulikzylinders 23 fest eingespannt. Die gesamte Spanneinheit 17 ist mit der Grundplatte 14 durch eine ringsumlaufende Schweißnaht 24 fest verbunden.

Weil das Verfahren zur Herstellung einer Leitschaufel nach der Erfindung unkompliziert und preisgünstig durchführbar ist und eine wesentliche Erhöhung der Festigkeitsverhältnisse im Bereich der Lötverbindung zwischen einem Leitschaufelring und der Leitschaufel ergibt, ohne daß die empfindlichen Strömungsverhältnisse im Bereich des Leitschaufelkranzes gestört werden, und das Materialgefüge keine schädliche Versprödung erleidet, kann von einer idealen Lösung der eingangs gestellten Aufgabe gesprochen werden.

In einer weiteren Ausgestaltung kann die Verdickung des Schaufelfußes auch durch einen Walzvorgang vorgenommen werden. Durch eine Schnittwalze kann ein Einschnitt vorgenommen werden, der dann durch die Schultern der Schnittwalze bzw.

-rolle zu der gewünschten Verdickung ausgerollt wird, wenn nicht das Ausrollen der Verdickung durch eine getrennte, nachlaufende Walze oder Rolle erfolgt. Es handelt sich dabei dann um einen Schnitt-Drückvorgang. Zur Verwendung kämen in diesem Zusammenhang bekannte Drückrollen auf entsprechenden Maschinen. Wesentlich bleibt, daß auch bei dieser Ausführung des erfindungsgemäßen Verfahrens im kalten Zustand eine fußartige Verdickung angestaucht wird. Gegebenenfalls kann dies auch ohne vorherigen Einschnitt direkt durch Drückrollen erfolgen.

## Ansprüche

1. Verfahren zur Herstellung einer Leitschaufel für ein Turbinen-oder Verdichter-Leitrad, unter Verwendung eines mit Übermaß abgelängten Profilstabes aus wärme-und korrosionsbeständigem Metall, insbesondere zur Vorbereitung für das Einlöten in das Leitrad, dadurch gekennzeichnet, daß dem Stab an wenigstens einem Ende im kalten Zustand eine fußartige Verdickung angestaucht und in deren Bereich eine Lötfläche ausgebildet wird.

2. Verfahren nach Anspruch 1, dadurch gekennzeichnet, daß die Zone der durch Stauchung erzielten Kaltverformung eine im Verhältnis zur Breite der fußartigen Verdickung relativ geringe Tiefe in axialer Richtung aufweist.

3. Verfahren nach Anspruch 1 und 2, dadurch gekennzeichnet, daß das Anstauchen des Stabendes mit einer schnellen Folge bleibender partieller Verformungsimpulse im kaltplastischen Zustand des Materials mit Hilfe eines Nietverfahrens vorgenommen wird.

4. Verfahren nach Anspruch 1 oder 2 oder 3, dadurch gekennzeichnet, daß das Anstauchen mit Hilfe eines Taumelnietverfahrens vorgenommen wird.

5. Verfahren nach einem der Ansprüche 1 bis 4, dadurch gekennzeichnet, daß bei einem beidseitig eine Verdickung aufweisenden Leitschaufel-Formling die Stauchungen der beiden Stabenden gleichzeitig mit zwei entgegengerichteten Nieteinheiten im Tandemverfahren durchgeführt werden.

6. Verfahren nach einem oder mehreren der Ansprüche 1 bis 5, dadurch gekennzeichnet, daß aus einem doppelt langen, Übermaß aufweisenden Vormaterial-Provilstab durch gleichzeitig-beidseitiges Anstauchen von fußartigen Verbreiterungen der beiden Enden und anschließende mittige Trennteilung zwei zur Endbearbeitung vorgesehene Leitschaufel-Formlinge hergestellt werden.

7. Verfahren nach einem oder mehreren der Ansprüche 1 bis 6, dadurch gekennzeichnet, daß die Ebene der Stauch-Bearbeitung und damit die Verformungs-Hauptrichtung zur Längsachse des Leitschaufel-Formlings einen stumpfen Winkel aufweist.

8. Verfahren nach einem oder mehreren der Ansprüche 1 bis 7, dadurch gekennzeichnet, daß der Leitschaufel-Formling nach Beendigung des Anstauch-Vorgangs beidseitig abgelängt und das angestauchte Ende abgegratet, durch spanabhebende Bearbeitung die endseitigen Lötflächen maßhaltig hergestellt und feingeschlichtet und zuletzt ringsum entgratet werden.

9. Nach dem Verfahren der Erfindung, insbesondere nach den Ansprüchen 1 bis 8 hergestellter Turbinen-Leitschaufel-Formling, insbesondere zum Einlöten in einen Leitschaufelkranz, dadurch gekennzeichnet, daß dieser zumindest am äußeren Ende (1) eine kaltangestauchte fußartige Verdickung (2) aufweist, die mit einer endständigen Lötfläche (12) ausgebildet ist.

10. Leitschaufel nach Anspruch 9, dadurch gekennzeichnet, daß das Material des Leitschaufel-Formlings (3) im Bereich der fußartigen Verdickung (2) ein durch Kaltverdichtung im plastischen Zustand gegenüber dem Grundmaterial verändertes, insbesondere feinkörnigeres Gefüge aufweist.

11. Leitschaufel nach den Ansprüchen 9 und 10, dadurch gekennzeichnet, daß das Gefüge im Bereich der Verdickung (2) im wesentlichen keine oder nur eine sehr geringe Kern-oder Randzonenverhärtung aufweist, und somit insbesondere die für eine Leitschaufel erforderliche Gefüge-Zähigkeit im wesentlichen unverändert ist.

12. Leitschaufel nach den Ansprüchen 9 oder 10 oder 11, dadurch gekennzeichnet, daß der Leitschaufel-Formling (3) eine angestauchte Lötfläche -(4) aufweist, die gegenüber der Querschnittsfläche des Stabes (5) wesentlich vergrößert und insbesondere gegenüber dem Schaufelprofil wesentlich verbreitert ist.

FIG. 1a   FIG. 1b   FIG. 1c

0 199 073

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 134 376 (HICKEY) * Seite 2, Absatz 2; Seite 3, Absatz 2 - Ende Seite 4; Figuren 1-7 * | 1,9,12 | F 01 D 9/04 F 01 D 5/30 |
| Y | | 3,4,5 | |
| A | | 2,10, 11 | |
| | --- | | |
| Y | FEINWERKTECHNIK & MESSTECHNIK, Band 90, Nr. 6, September 1982, Seite 69, Hanser-Fachzeitschriften, München, DE; "Wirtschaftlich Kaltumformen durch Taumelpressen" | 3,4 | |
| | --- | | RECHERCHIERTE SACHGEBIETE (Int. Cl.4) |
| Y | DE-A-3 306 991 (HONDA) * Seite 3, Zeile 5 - Seite 4, Zeile 15 * | 5 | F 01 D F 04 D B 23 P B 21 J |
| | --- | | |
| A | CH-A- 238 024 (SULZER) * Insgesamt * | 1 | |
| | --- | | |
| A | FR-A-2 451 238 (KLIMOV) | | |
| | --- /- | | |

Der vorliegende Recherchenbericht wurde für alle Patentansprüche erstellt.

| Recherchenort | Abschlußdatum der Recherche | Prüfer |
|---|---|---|
| DEN HAAG | 22-07-1986 | IVERUS D. |

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | VDI/VDE-RICHTLINIEN, VDI/VDE 2251, Blatt 3, August 1965; "Feinwerkelemente Lötverbindungen" | | |

-----

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 22-07-1986 | IVERUS D. |